Europäisches Patentamt

European Patent Office

Office européen des brevets

(19)

(11) Numéro de publication : **0 567 405 A1**

(12) # DEMANDE DE BREVET EUROPEEN

(21) Numéro de dépôt : **93401041.4**

(22) Date de dépôt : **22.04.93**

(51) Int. Cl.$^5$ : **C02F 3/34, C11C 1/02**

(30) Priorité : **24.04.92 FR 9205063**

(43) Date de publication de la demande :
**27.10.93 Bulletin 93/43**

(84) Etats contractants désignés :
**AT BE CH DE DK ES FR GB GR IE IT LI LU MC NL PT SE**

(71) Demandeur : **FRANCEAUX S.A.**
**136 Rue Léon Jouhaux**
**F-78500 Sartrouville (FR)**

(72) Inventeur : **Kallel, Monem**
**136 rue Léon Jouhaux**
**F-78500 Sartrouville (FR)**
Inventeur : **Guillaume, Alain**
**35 rue des Liers**
**F-91240 St Michel/Orge (FR)**
Inventeur : **Malesieux, Gérard**
**13 Jardins Boieldieu**
**F-92800 Puteaux (FR)**

(74) Mandataire : **CABINET BONNET-THIRION G. FOLDES**
**95 Boulevard Beaumarchais**
**F-75003 Paris (FR)**

(54) **Procédé, dispositif et installations de traitement de déchets graisseux et produit de valorisation de déchets graisseux.**

(57)    Le procédé consiste à ajouter une base liquide jusqu'à l'obtention d'une solution aqueuse de graisses saponifiées présentant un pH alcalin.

Les déchets graisseux sont ainsi transformés en un produit fluide homogène et deviennent sous cette forme biodégradables en aérobie ou anaérobie.

Il peuvent également sous cette forme être valorisés comme agent dénitrifiant des eaux résiduaires.

Le dispositif (3) selon l'invention peut être disposé en tête d'installation. Il comporte un décanteur (4) pour séparer les déchets graisseux de leurs eaux acides (8) un réacteur de saponification (5) , un dispositif de mélange (11) , une admission de base liquide (12) et une évacuation (13) des déchets graisseux saponifiés vers un bassin (1) de traitement biologique.

FIG.1

La présente invention concerne un procédé de traitement de déchets graisseux permettant leur élimination ultérieure par biodégradation ou leur valorisation. Elle concerne également un dispositif pour la mise en oeuvre de ce procédé, et des installations équipées d'un tel dispositif.

Les déchets graisseux proviennent par exemple de pièges à graisses de station d'épuration, de restaurants ou d'industries agro-alimentaires.

On sépare les graisses des eaux usées notamment parce que leur faible densité et leur insolubilité dans l'eau à température ambiante rendent leur biodégradation impossible conjointement : les graisses flottent et le contact avec le milieu bactérien n'est pas réalisé.

On se trouve ainsi en présence de déchets graisseux qu'il faut traiter séparément.

La solution la plus couramment utilisée consiste à déverser les déchets graisseux dans des décharges et à les laisser se dégrader à l'air libre. Cependant, compte tenu des exigences croissantes en matière de protection de l'environnement, ces décharges sont de moins en moins tolérées et sont amenées à disparaître.

On a donc recherché d'autres solutions et on s'est tourné notamment vers les procédés d'incinération déjà utilisés par exemple pour éliminer les boues produites en excès provenant de stations d'épuration. Cependant, outre les nuisances olfactives, de nombreuses difficultés ont été rencontrées : les graisses chaudes sont corrosives et de ce fait les installations doivent être sophistiquées ce qui implique des coûts d'exploitation trop élevés et, par ailleurs, les cendres produites ne sont pas valorisables.

D'autres solutions ont été envisagées, notamment la dégradation des graisses par compostage ou lombriculture. Cependant ces techniques sont également difficiles à mettre en oeuvre industriellement et, par ailleurs, les rendements sont très variables notamment avec le cycle des saisons.

Une autre solution encore a été de tenter de mettre au point des procédés de biodégradation spécifiques aux graisses. Là encore, de nombreuses difficultés ont été rencontrées.

Des conditions opératoires très pointues doivent être mises au point pour que le contact entre les bactéries et les graisses soit réalisé et que les phénomènes de flottation et d'inhibition des bactéries soient évités.

On a également cherché à valoriser les graisses collectées en savonneries mais ce projet a été abandonné pour défaut de rentabilité.

Ainsi, les solutions envisagées jusqu'à présent pour éliminer les déchets graisseux ou les valoriser ne sont pas satisfaisantes.

La présente invention propose par contre un procédé et un dispositif simples à mettre en oeuvre et peu coûteux, qui permettent de répondre aux besoins actuels dans ce domaine.

Il est proposé un procédé de traitement de déchets graisseux en vue de leur élimination ou de leur valorisation, caractérisé en ce qu'il consiste à ajouter une base liquide jusqu'à l'obtention d'une solution aqueuse de graisses saponifiées présentant un pH alcalin.

Le procédé de l'invention permet d'obtenir une solution homogène fluide dans laquelle les glycérols et savons dérivés des graisses sont solubilisés. Cette solution de graisses saponifiées présente de nombreux attraits.

Tout d'abord, les déchets graisseux solides transformés ainsi en solution liquide deviennent faciles à diluer, à pomper et à éliminer par biodégradation. Les problèmes de contact avec la biomasse sont résolus : un simple brassage permet d'assurer ce contact. Des essais décrits plus loin montrent les résultats obtenus d'élimination des déchets graisseux saponifiés par biodégradation aérobie et anaérobie.

Par ailleurs, la déshydratation d'une solution de graisses saponifiées jusqu'à un taux de matières sèches voisin de 40% conduit à un produit pâteux pelletable présentant une capacité calorifique de l'ordre de 4000 à 7000 kcal par kg de matières qui peut être utilisé avantageusement comme combustible. L'incinération de ce produit peut être également une manière simple et peu coûteuse d'éliminer les déchets graisseux.

En outre, des essais qui seront décrits plus loin, montrent que la solution de graisses saponifiées peut être valorisée comme agent de dénitrification dans le processus de purification des eaux usées, les graisses saponifiées constituant avantageusement une source de carbone organique carencée en azote.

Selon d'autres aspects plus particuliers du procédé de l'invention, on fixe la valeur du pH à 9. A ce pH, on est en présence d'un déchet sous forme liquide homogène.

D'autre part, l'hydroxyde de sodium est la base la mieux adaptée pour réaliser la saponification et cette base présente l'avantage d'être peu coûteuse.

D'autre part encore, la saponification peut être réalisée soit sur les déchets graisseux tels quels, et l'on peut même débuter cette opération dans la citerne de transport, soit uniquement sur les déchets graisseux épaissis débarrassés des eaux acides éventuellement présentes qui contiennent les acides gras libres. Dans ce dernier cas, on fait avantageusement l'économie de la quantité de base qui serait sinon utilisée pour neutraliser ces eaux acides.

Par ailleurs, si l'on choisit d'éliminer les déchets graisseux par biodégradation, il est préférable de procéder, dans une étape préalable, à un dégrillage grossier des déchets graisseux et dans une étape ultérieure à un tamisage du produit saponifié de sorte que l'on injecte dans le dispositif de traitement biologique un produit exempt de particules solides. Il est également préférable dans ce cas de ramener le pH de la solution de graisses saponifiées à un pH neutre soit avant de la mettre au contact de la biomasse soit directement dans le bassin de traitement biologique. On évite en effet ainsi avantageusement la formation de mousses. Pour ramener la solution de graisses saponifiées à pH neutre, on peut utiliser les eaux acides des déchets graisseux qui sont alors recyclées et/ou une solution d'acide minéral. Les eaux acides peuvent en même temps servir de liquide de dilution des graisses saponifiées.

La présente invention propose également un dispositif pour la mise en oeuvre du procédé de l'invention qui comporte un réacteur de saponification avec un moyen d'admission des déchets graisseux, un moyen d'admission de base liquide et un moyen d'évacuation des graisses saponifiées.

Selon un autre aspect, la présente invention propose des installations de biodégradation de déchets graisseux en aérobie et en anaérobie équipées en tête d'un dispositif tel que défini ci-dessus.

La présente invention sera mieux comprise et d'autres avantages ressortiront à la lumière de la description qui va suivre, faite en référence aux dessins annexés sur lesquels :

- la figure 1 représente schématiquement une installation de biodégradation en aérobie de déchets graisseux comportant un dispositif selon une première forme de réalisation de l'invention;
- la figure 2 représente schématiquement une installation d'épuration d'eaux résiduaires en anoxie, comportant en tête un dispositif de saponification conforme à l'invention mais selon une seconde forme de réalisation;
- les figures 3 à 11 illustrent des essais qui ont été menés pour montrer le déroulement du procédé de l'invention et les performances du produit obtenu dans diverses applications.

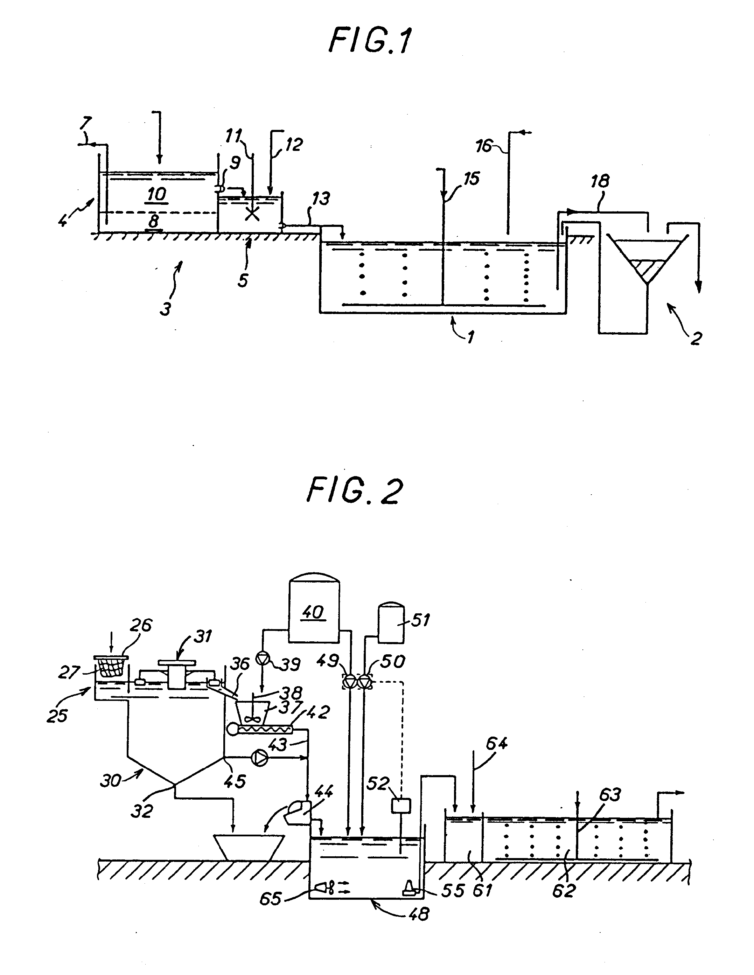

La figure 1 représente schématiquement une installation de biodégradation aérobie de déchets graisseux avec en tête un dispositif selon l'invention.

Cette installation comprend, de manière classique pour un traitement biologique en aérobie, un bassin de traitement 1, où se déroule la biodégradation au contact d'air et de boues activées, suivi d'un poste de décantation 2, où l'on sépare, d'une part les eaux propres qui peuvent être rejetées à l'égout et, d'autre part, les boues produites qui sont, soit recyclées dans le bassin de traitement, soit évacuées.

Selon l'invention, les déchets graisseux subissent un pré-traitement avant d'être introduits dans le bassin de traitement biologique 1. Ce pré-traitement a pour but de transformer les déchets graisseux qui se présentent sous forme solide en une solution homogène biodégradable.

A cet effet, conformément à la présente invention, un dispositif de pré-traitement 3 des déchets graisseux est installé en amont du poste de dégradation biologique 1.

Les déchets graisseux sont constitués par des graisses sous forme solide, des particules solides et des eaux usées acides entraînées avec les graisses qui contiennent des acides gras libres. Un décanteur 4 est prévu pour séparer ces eaux acides du reste des déchets graisseux comportant, en partie basse, un moyen de soutirage 7 des eaux acides décantées 8 et en partie haute une conduite 9 pour évacuer les graisses 10 dans un réacteur de saponification 5.

Ce réacteur 5 comporte un dispositif de mélange 11, un moyen d'admission 12 d'une solution de soude et un conduit 13 pour évacuer les graisses une fois saponifiées et les déverser dans le bassin de traitement biologique 1.

L'installation fonctionne de la manière suivante.

Les déchets graisseux sont déversés dans le décanteur 4. Après un temps de séjour suffisant pour que la décantation s'opère correctement entre les graisses 10 qui vont flotter et les eaux acides 8 qui vont décanter, on ouvre la conduite 9 pour déverser uniquement les graisses 10 dans le réacteur de saponification 5.

L'agitation est réglée pour que la production de mousses soit modérée.

Les eaux acides décantées sont soutirées et jetées à l'égout.

La réaction peut être suivie en mesurant le pH jusqu'à ce qu'il atteigne un pH alcalin, de préférence 9. On peut également suivre l'état physique du mélange réactionnel et attendre qu'il devienne liquide et homogène. Il est alors déversé par le conduit 13 dans le bassin de traitement biologique 1 où il est mis au contact de boues activées adaptées à la biodégradation de ce produit pendant une période préalable. Un dispositif 15 apporte l'air nécessaire à l'oxygénation de la biomasse et à son brassage. Un conduit 16 est prévu pour l'admission des boues activées.

Après un temps de séjour suffisant déterminé, on évacue vers le décanteur la biomasse 18 constituée par les boues et les eaux propres. Après décantation, les boues produites en excès sont évacuées pour être éliminées et le reste des boues est recyclé. Les eaux propres sont rejetées à l'égout.

Des essais qui seront décrits plus loin, montrent comment se déroule la saponification des graisses et la biodégradation de ces graisses saponifiées en aérobie. D'autres essais montrent aussi comme s'opère la biodégradation des graisses saponifiées en anaérobie.

La figure 2 représente schématiquement une partie d'une station d'épuration d'eaux usées avec en tête un dispositif de saponification de déchets graisseux qui produit sur place une solution de graisses saponifiées destinée à être utilisée comme agent facilitant la dénitrification des eaux résiduaires dans cette station.

Le dispositif de saponification est réalisé différemment de celui qui a été décrit précédemment. Il comporte un poste 25 de dégrillage grossier des déchets graisseux, équipés d'un ou de plusieurs supports 26 sur lesquels sont adaptés des filets jetables ou paniers à grosses mailles 27, pour éliminer les particules solides de diamètres supérieurs à environ 30 mm par exemple.

Les déchets graisseux filtrés sont déversés directement dans un décanteur 30 qui comporte un dispositif tournant 31 de raclage des graisses flottant en surface et, à sa base, une ouverture 32 pour purger les sédiments.

En partie basse de ce décanteur 30, un moyen de soutirage 45 est prévu pour récupérer les eaux acides après décantation pour les utiliser ultérieurement à la fois comme liquide de dilution des graisses saponifiées et comme apport d'acide pour modifier le pH.

Un conduit d'évacuation 36 est aménagé pour recevoir les graisses épaissies écrémées en surface et les déverser ensuite dans un réacteur de saponification 37 équipé d'un dispositif mélangeur 38 et d'une pompe 39 d'admission de solution de soude stockée dans un réservoir 40. A sa base, le réacteur 37 comprend une vis de transport 42 qui évacue au fur et à mesure les graisses saponifiées.

Une conduite 43 amène ensuite les graisses saponifiées vers un tamis tournant 44 qui est équipé d'un filtre arrêtant les particules cette fois de petits diamètres, supérieurs à 1mm.

Une conduite amène les eaux acides récupérées pour diluer les graisses saponifiées avant leur passage dans le tamis 44. Ces eaux, de par leur caractère acide, vont contribuer à ramener le pH de la solution de graisses saponifiées à un pH proche de la neutralité préférable pour le traitement biologique ultérieur.

La solution aqueuse diluée de graisses saponifiées est déversée dans un bassin de stockage 48 qui comporte un dispositif mélangeur 65, une admission 49 de soude en provenance du réservoir 40 et une admission 50 de solution acide stockée dans un réservoir 51. Dans ce bassin 48 on stocke les graisses saponifiées et en outre on ajuste la solution à un pH proche de la neutralité sous le contrôle d'un dispositif de réglage 52 agissant sur les admissions 49 et 50.

Une pompe 55 permet d'évacuer la solution de graisses saponifiées vers un bac de traitement anoxie 61 dans lequel sont introduites les eaux résiduaires à purifier et dans lequel va se dérouler le processus de dénitrification. Il est prévu ensuite comme de manière classique dans ce type d'installation un bassin d'aération 62 avec son dispositif d'aération 63.

Cette installation fonctionne de la manière suivante.

Les déchets graisseux sont dépotés dans les filets 27, les grosses particules solides sont retenues tandis que le reste des déchets s'écoule directement dans le décanteur 30. Les filets, lorsqu'ils sont pleins sont ficelés sur place et jetés tels quels à la décharge. Le dispositif de raclage 31 déverse les graisses épaissies en surface dans le réacteur de saponification 37. La soude est introduite sous agitation avec un débit réglé en fonction du débit de graisses introduites dans le réacteur.

A leur sortie du réacteur de saponification, les graisses saponifiées sont diluées avec les eaux acides puis tamisées et déversées dans le bassin de stockage 48 où le pH est éventuellement, si l'apport d'acide des eaux acides n'a pas été suffisant, ajusté à une valeur proche de la neutralité.

La solution de graisses saponifiées est injectée en quantités appropriées dans le bac anoxie 61, où se déroule la dénitrification, comme source de carbone organique carencée en azote.

Un essai décrit plus loin montre dans quelle mesure les graisses saponifiées agissent pour favoriser cette dénitrification.

Le dispositif de saponification qui est décrit ici permet d'obtenir une solution aqueuse de graisses saponifiées mieux adaptée à un traitement biologique ultérieur : elle est exempte de particules solides et elle présente un pH neutre préférable pour un traitement biologique, à un pH voisin de 7 dans le traitement biologique, on élimine avantageusement la formation de mousses.

Si l'on choisit de valoriser les déchets graisseux sous forme de produit déshydraté, le dispositif décrit précédemment en référence à la figure 1 pourra suffire.

Par ailleurs, dans cette forme de réalisation du dispositif de saponification, on règle le pH des graisses saponifiées à un pH proche de la neutralité avant de les mettre au contact de la biomasse. Il est toutefois possible de faire ce réajustement de pH directement dans le bassin de traitement biologique.

Les essais qui sont décrits ci-après illustrent le déroulement de la saponification des déchets graisseux et des exemples d'application du produit saponifié.

Essai N° 1 : Suivi de la réaction de saponification.

L'expérience est réalisée sur deux échantillons de déchets graisseux provenant de bacs à graisses de restaurants. Elle consiste à suivre l'évolution du pH et de l'état physique des deux échantillons en fonction de quantités progressives de solution NaOH 1N ajoutées.

Les échantillons sont constitués essentiellement de triglycérides, d'acides gras libres, de matières volatiles et de matières solides. Ils sont caractérisés de la manière suivante:

| Echantillon | Acidité Oléique % (A. O.) | Matières sèches % (M.S.) | Matières Volatiles % (M.V./M.S.) | pH |
|---|---|---|---|---|
| N° 1 | 35 | 68,5 | 99,5 | 4,2 |
| N° 2 | 51,4 | 67,2 | 99,3 | 4,44 |

Le pourcentage d'acidité oléique est significatif de la quantité d'acides gras libres et de la quantité de triglycérides présents dans l'échantillon: un taux d'A.O. élevé correspond à un taux de triglycérides faible.

L'expérience montre qu'à pH 9 les graisses sont totalement saponifiées. Le mélange réactionnel se présente sous forme d'une solution liquide homogène qui peut être diluée. Ceci va permettre d'augmenter de manière significative la surface de contact avec la biomasse et faciliter ainsi la biodégradation des graisses.

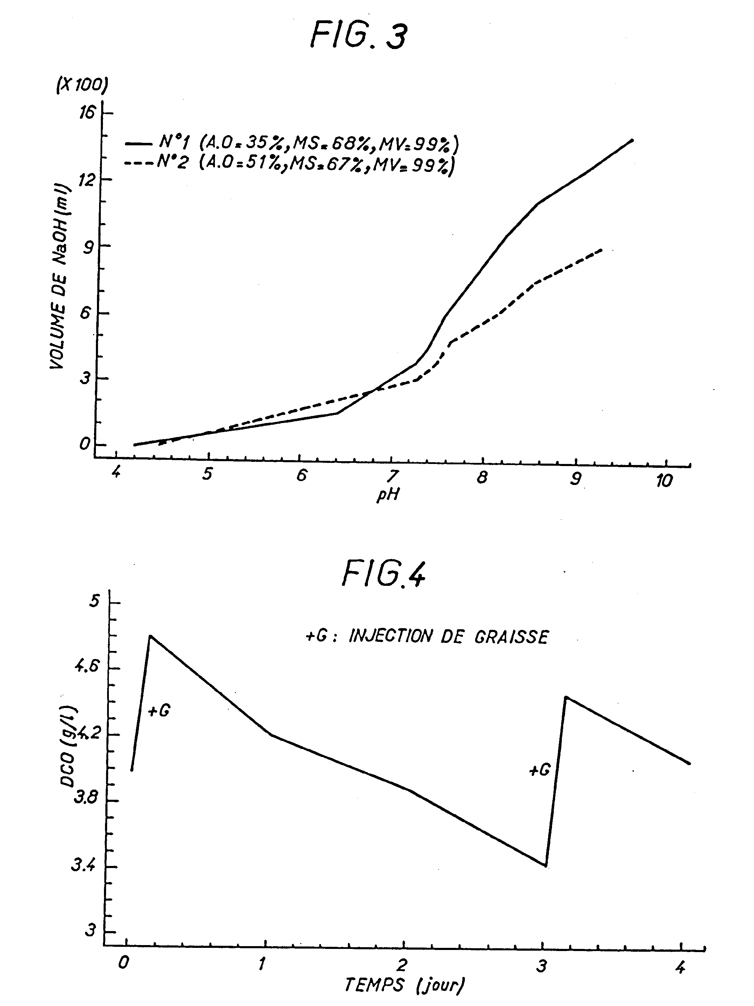

A la figure 3, est représentée la courbe de l'évolution du pH en fonction du volume de soude introduit.

On voit sur cette figure, que la réaction s'effectue en deux étapes. Dans une première étape, on constate qu'une faible quantité de soude permet de passer de pH 4 à pH 7, quelque soit l'échantillon. Puis, dans une deuxième étape on constate que, par contre, pour atteindre un pH de 9 il faut ajouter une quantité de soude importante quelque soit l'échantillon, et plus importante dans le cas de l'échantillon 1.

La première étape correspond en fait à la neutralisation des acides gras libres tandis que la seconde étape correspond à la saponification des triglycérides.

Par comparaison, l'échantillon N° 1 présentant une acidité oléique plus faible que l'échantillon N° 2 et, cela signifiant qu'il contient plus de triglycérides, pour atteindre le pH de 9 et saponifier les triglycérides de l'échantillon N° 1 une quantité plus importante de soude a été nécessaire.

On peut conclure également de cette expérience qu'en éliminant les eaux résiduaires contenant les acides gras libres, on réduit la quantité de soude à la quantité nécessaire uniquement à la saponification des triglycérides.

Essai N° 2 : Suivi d'une biodégradation aérobie de graisses saponifiées.

Dans cette expérience, des graisses saponifiées sont mises au contact de boues activées (BA) nitrifiantes. On utilise un dispositif expérimental constitué par un tube de O,3 mm de diamètre et de 1,3m de longueur. L'aération du système, permettant d'apporter la quantité suffisante d'oxygène dissous, est réalisée au moyen d'un disque recouvert d'une membrane en caoutchouc finement poreuse qui se gonfle au cours du passage de l'air. Pendant les arrêts de fonctionnement par contre, la membrane se dégonfle et les pores se ferment évitant ainsi le colmatage du dispositif.

L'expérience est menée en trois étapes :

Première étape :

Le dispositif est chargé de 30 l de BA nitrifiantes et mis en fonctionnement.

On y introduit en une fois une solution de graisses saponifiées correspondant à 800 mg/l de DCO (Demande Chimique en Oxygène).

La figure 4 montre l'évolution de la DCO en fonction du temps. On voit que les graisses saponifiées ont été dégradées en deux jours : la DCO a chuté d'environ 400 mg/l/j.

Deuxième étape

Au cours du 3ème jour, on procède à une nouvelle injection de graisses saponifiées en quantité plus importante, correspondant à 1100 mg/l de DCO.

La figure 4 montre que l'on constate alors une chute de DCO égale à celle des premiers jours mais pas plus importante.

Cette dégradation limitée est probablement liée à une carence d'azote dont la concentration au début de l'expérience ne s'élevait qu'à 1,9 mg/l en N-NH4.

Troisième étape :

Elle consiste à procéder à des injections espacées dans le temps d'azote N-NH$_4$ et de graisses saponifiées.

On cherche à obtenir une dégradation plus élevée et à confirmer que la dégradation des graisses saponifiées serait favorisée par la présence de N-NH$_4$.

On fait varier les quantités de DCO entre 0,7 et 7,0 g/l et les quantités d'azote entre 5 mg et 53 mg/l.

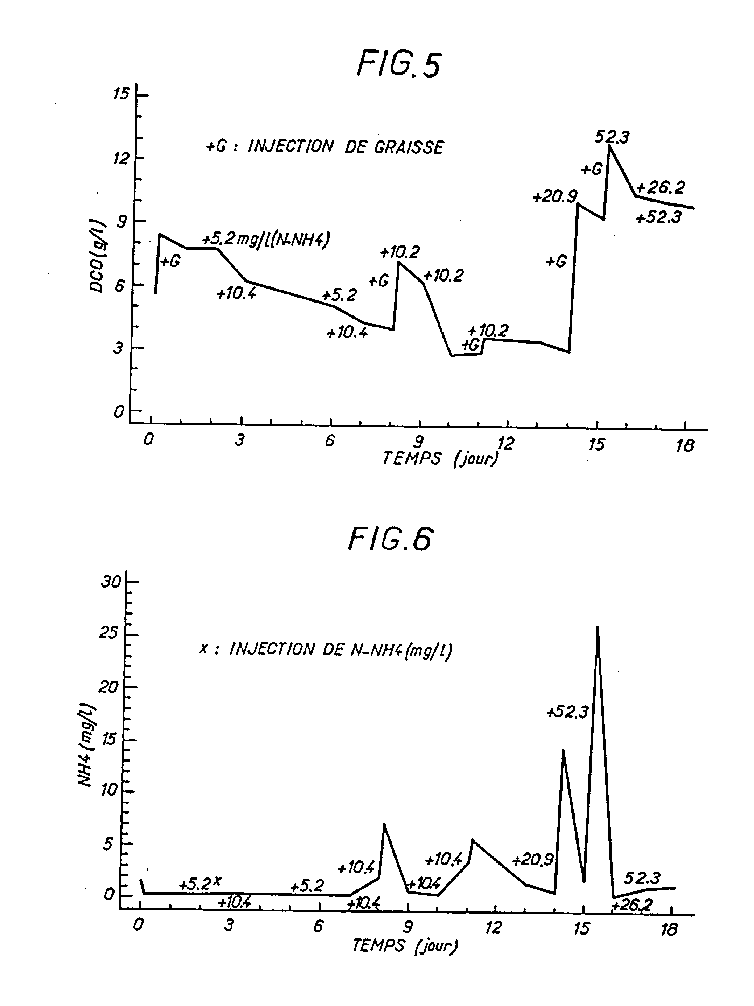

L'expérience est menée sur 18 jours. Elle est illustrée aux figures 5 à 7 :

La figure 5 montre l'évolution de la DCO en fonction du temps. On a fait apparaître sur le tracé de la courbe les injections de graisses saponifiées (+G) les 1er, 8ème, 11ème, 14ème et 15ème jours. On a également reporté sur le tracé de la courbe les quantités d'azote sous forme N-NH$_4$ injectées.

La figure 6 montre l'évolution du taux de N-NH$_4$ en fonction du temps. On a reporté également sur cette courbe les quantités d'azote injectées.

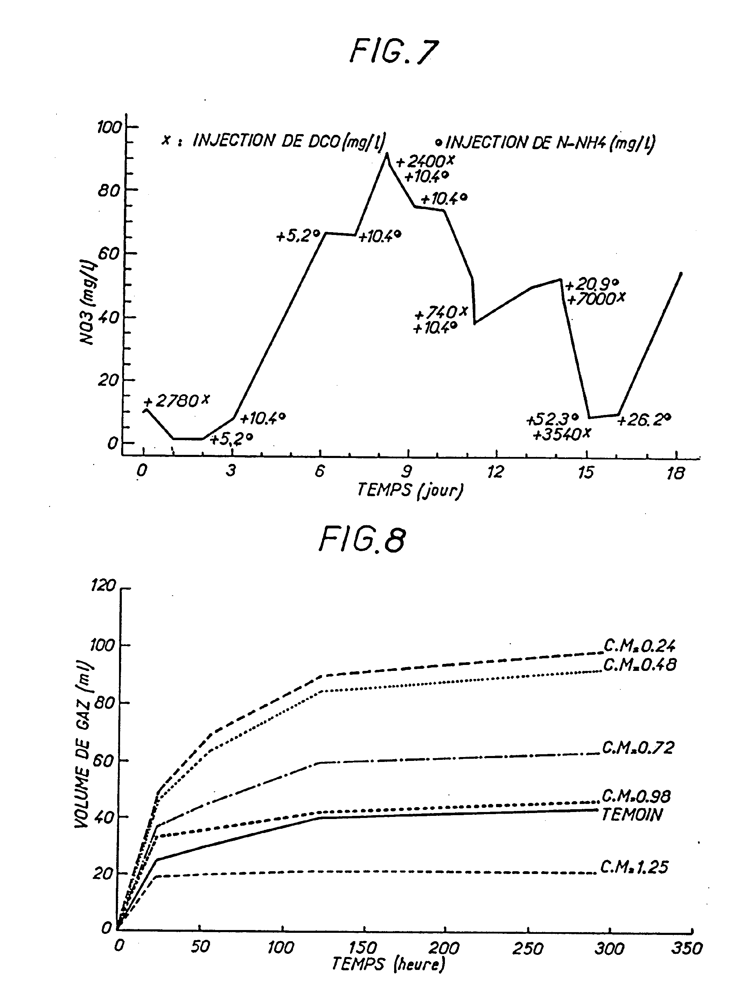

La figure 7 montre l'évolution du taux de nitrates en fonction du temps. On a ici reporté à la fois les quantités de DCO et les quantités de N-NH$_4$ injectées.

Il ressort de la figure 5 que la dégradation des graisses saponifiées est importante en présence de N-NH$_4$: elle atteint 3000 mg/l/j le 10ème jour.

On voit qu'au contraire en l'absence de N-NH$_4$, la dégradation des graisses saponifiées est négligeable (2ème jour).

Par ailleurs, il ressort de la figure 6 que la nitrification est rapide et pratiquement totale : les injections les plus élevées, de l'ordre de 52 mg/l, sont au bout d'une journée de contact réduites à des valeurs très faibles, inférieures ou égales à 2 mg/l.

Il ressort de la figure 7 que la dénitrification se manifeste lorsque le milieu présente une carence en N-NH$_4$ et qu'il est chargé en matière organique : au début de l'expérience la teneur en nitrates est voisine de 10,7 mg/l ; on constate que très peu de temps après l'introduction de graisses saponifiées en quantité correspondant à 2700 mg/l de DCO (1er jour) la teneur en nitrates a chuté jusqu'à 1,2 mg/l.

Essai N° 3 : Suivi d'une digestion anaérobie de graisses saponifiées.

Les graisses saponifiées sont mises au contact de boues digérées (B.D.) provenant d'une station d'épuration et présentant les caractéristiques suivantes:

Matières solides (M.S.)  : 1,4 % en poids
Matières volatiles (M.V.)  : 52,2 % en poids
        pH  : 7,1

L'expérience est réalisée en deux étapes.

Dans une première étape, on étudie l'influence de la charge appliquée pour déterminer quelle est la limite maximale assimilable par les bactéries.

Dans une série de tubes à essai on introduit des charges massiques croissantes, allant de 0,245 à 1,52 kg de produit saponifié sec par kg de B.D. sèches par jour (ci-après notées CM) comme mentionné dans le tableau suivant :

| Tube à essai | 1 | 2 | 3 | 4 | 5 | 6 |
|---|---|---|---|---|---|---|
| V ml | 0.5 | 1 | 1.5 | 2 | 2.5 | 3 |
| CV kg/m3.j | 3.3 | 6.65 | 10.15 | 13.75 | 17.45 | 21.3 |
| CM kg/kg.j | 0.24 | 0.48 | 0.72 | 0.98 | 1.25 | 1.52 |

CV = Charge volumique en kg de graisses/m$^3$ de BD sèches.j

Les tubes à essais ainsi chargés sont couverts par d'autres tubes de diamètre légèrement supérieur et gradués de bas en haut de manière à mesurer la quantité de biogaz formée. L'ensemble est immergé dans une cuve remplie d'eau que l'on maintient à l'étuve à 37°C.

La dégradation des graisses est suivie pendant 300 heures de contact. Le pH n'est mesuré qu'une seule fois, après 23 heures de contact pour ne pas perturber l'écosystème.

Les résultats de pH sont donnés dans le tableau suivant:

| tube | témoin | 1 | 2 | 3 | 4 | 5 | 6 |
|------|--------|------|------|------|------|------|------|
| CM | - | 0,24 | 0,48 | 0,72 | 0,98 | 1,25 | 1,52 |
| pH | 7,1 | 6,97 | 6,95 | 6,89 | 6,79 | 6,72 | 6,64 |

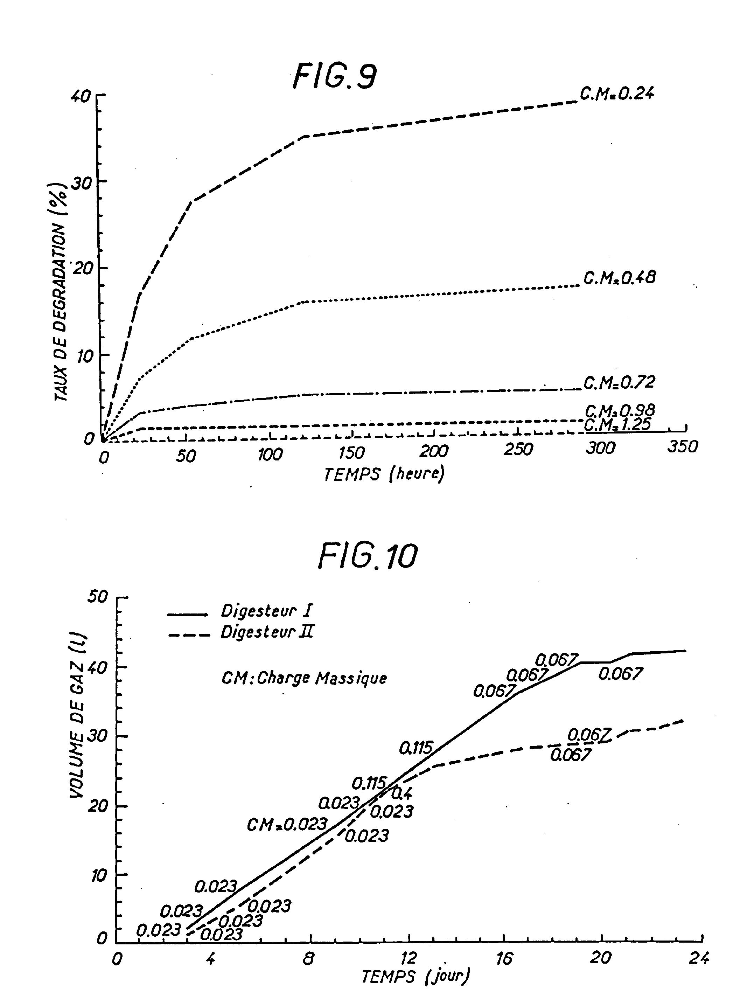

Les figures 8 et 9 illustrent l'évolution de la biodégradation des graisses au cours des 300 heures de l'expérience.

A la figure 8 est représentée la courbe du volume de gaz produit en fonction du temps pour les différentes charges massiques.

Il ressort de cette figure que le taux de dégradation le plus élevé correspond à une CM = 0,24 pour laquelle on a mesuré le plus important dégagement gazeux. Ceci est confirmé par la figure 9 qui représente la courbe du pourcentage de dégradation en fonction du temps pour ces mêmes CM.

On constate par ailleurs d'après la figure 8, que la production de gaz pour la CM = 0,48 est légèrement inférieure à celle correspondant à la CM = 0,24 mais qu'en fait en examinant la figure 9 elle correspond à un taux de dégradation beaucoup plus faible.

On constate également qu'au delà d'une CM = 0,48 la production de gaz s'affaiblit et provoque une inhibition progressive de l'écosystème.

On a mis en évidence par ailleurs dans un essai complémentaire qu'une CM $\geqq$ 2 entraîne une inhibition rapide même instantanée de l'activité méthanifère.

On peut conclure au vu de ces constatations qu'une CM=0,24 permet la production optimale de gaz dans le temps avec un taux de dégradation le plus important.

<u>Dans une deuxième étape</u>, on étudie l'évolution de la dégradation des graisses saponifiées.

On utilise deux digesteurs pilotes fonctionnant à volume constant et maintenus à une température de 37°C environ. Chaque digesteur est rempli de boues digérées.

On applique pendant 10 jours une même charge massique (CM = 0,023 injectée tous les 2 jours) dans les deux digesteurs pour établir le même écosystème, c'est-à-dire avec des BD acclimatées de la même façon. A partir du 11ème jour, cette stabilisation étant obtenue, on augmente alors la charge appliquée dans le digesteur I à 0,115 et on augmente la charge appliquée un peu plus rapidement dans le second digesteur II à 0,4. Puis, à partir du 16ème jour environ, on revient à une charge de 0,067 dans les deux digesteurs. La production de gaz est mesurée pendant 24 jours.

A la figure 10 est représentée la courbe du volume de gaz produit en fonction du temps.

La première partie de la courbe montre que l'écosystème était effectivement stabilisé dans les deux digesteurs : la cinétique de la digestion méthanifère est constante jusqu'au 11ème jour.

On constate ensuite que la CM de 0,4 appliquée dans le digesteur II a entraîné l'inhibition du système. On en déduit que la charge à appliquer doit être inférieure à 0,4.

En revanche, dans le digesteur I la production méthanifère est restée la même.

On a également mesuré les taux de $N\text{-}NH_4$ et $P\text{-}PO_4$ les 7, 14 et 21èmes jours. Les résultats sont reproduits dans le tableau suivant :

| Temps | Digesteur I | | Digesteur II | |
|-------|-------------|------------------|-------------|------------------|
| | $N\text{-}NH_4$ mg/l | $P\text{-}PO_4$ mg/l | $N\text{-}NH_4$ mg/l | $P\text{-}PO_4$ mg/l |
| 7 jours | 871 | 21 | 1108 | 15 |
| 14 jours | 1256 | 44,6 | 1595 | 77,7 |
| 21 jours | 1374 | 65,6 | 1742 | 80,4 |

Les déchets graisseux renferment de faibles quantités d'azote et de phosphore, la dégradation de la matière organique permet la libération de ces éléments. Ainsi leur augmentation observée ici indique un bon fonctionnement du système.

**Revendications**

1. Procédé de traitement de déchets graisseux en vue de leur élimination ou de leur valorisation, caractérisé en ce qu'il consiste à ajouter une base liquide jusqu'à l'obtention d'une solution aqueuse de graisses saponifiées présentant un pH alcalin.

2. Procédé selon la revendication 1, caractérisé en ce que l'on procède à l'ajout de base jusqu'à l'obtention d'une solution de pH 9.

3. Procédé selon la revendication 1 ou 2, caractérisé en ce que la base utilisée est de l'hydroxyde de sodium.

4. Procédé selon l'une quelconque des revendications précédentes, caractérisé en ce que l'on effectue la saponification des déchets graisseux sous agitation.

5. Procédé selon l'une quelconque des revendications précédentes, caractérisé en ce que l'on ramène ensuite la solution aqueuse de graisses saponifiées à un pH voisin de la neutralité.

6. Procédé selon l'une quelconque des revendications 1 à 5, caractérisé en ce que la saponification est réalisée sur les graisses épaissies.

7. Procédé selon l'une quelconque des revendications 5 à 8, caractérisé en ce que l'on utilise les eaux acides des déchets graisseux pour ramener les graisses saponifiées à un pH neutre.

8. Procédé selon la revendication 7, caractérisé en ce que l'on procède à un tamisage préalable des eaux acides.

9. Procédé selon l'une quelconque des revendications précédentes, caractérisé en ce que l'on procède dans une étape préalable à un dégrillage grossier des déchets graisseux.

10. Procédé selon l'une quelconque des revendications précédentes, caractérisé en ce que l'on procède à un tamisage des graisses saponifiées.

11. Dispositif pour la mise en oeuvre du procédé selon l'une quelconque des revendications 1 à 10, caractérisé en ce qu'il comprend un réacteur de saponification (5;37) avec un moyen d'admission des déchets graisseux (9), un moyen d'admission de base liquide (12) et un moyen d'évacuation (13) des graisses saponifiées.

12. Dispositif selon la revendication 11, caractérisé en ce que le réacteur de saponification (5;37) est équipé d'un moyen (11;38) pour agiter le milieu réactionnel.

13. Dispositif selon la revendication 11 ou 12, caractérisé en ce qu'il comporte en amont du réacteur de saponification un dispositif (25) de dégrillage grossier des déchets graisseux comportant des filets jetables (27).

14. Dispositif selon l'une quelconque des revendications 11 à 13, caractérisé en ce qu'il comporte un moyen de séparation (4,30) des graisses et des eaux acides (8) disposé en amont du réacteur de saponification (5;37).

15. Dispositif selon la revendication 14, caractérisé en ce que ledit moyen de séparation est un décanteur (30) avec un racleur (31) pour écrémer les graisses épaissies.

16. Dispositif selon l'une quelconque des revendications 11 à 15, caractérisé en ce qu'il comporte un moyen (60) pour tamiser les graisses saponifiées.

17. Installation de biodégradation de déchets graisseux, caractérisée en ce qu'elle comporte un dispositif (3) selon l'une quelconque des revendications 11 à 16 en amont du poste de traitement biologique (1;2).

18. Installation selon la revendication 17, caractérisée en ce que le poste de traitement biologique comporte un bassin de traitement aérobie (1).

19. Installation selon la revendication 17, caractérisée en ce que le poste de traitement biologique comporte un poste de digestion anaérobie.

20. Produit de valorisation des déchets graisseux caractérisé en ce qu'il est constitué par les savons et glycérols dérivés des graisses et en ce qu'il se présente sous une forme homogène fluide de pH 7 à 9 avec un taux de matières sèches compris entre 1 % et 40 % en poids.

# FIG.1

# FIG.2

## FIG. 3

## FIG.4

+G : INJECTION DE GRAISSE

11

## FIG.5

+G : INJECTION DE GRAISSE

52.3

+G

+26.2

+20.9

+52.3

+G

+5.2 mg/l (N-NH4)

+10.2

+10.2

+10.4

+5.2

+G

+10.4

+10.2

+G

DCO (g/l)

TEMPS (jour)

## FIG.6

x : INJECTION DE N-NH4 (mg/l)

+52.3

+20.9

+10.4

52.3

+5.2ˣ

+5.2

+10.4

+10.4

+10.4

+10.4

+26.2

NH4 (mg/l)

TEMPS (jour)

# FIG.7

x : INJECTION DE DCO (mg/l)   o INJECTION DE N-NH4 (mg/l)

# FIG.8

FIG.9

FIG.10

Office européen
des brevets

**RAPPORT DE RECHERCHE EUROPEENNE**

Numero de la demande

EP 93 40 1041

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DD-A-142 870 (VEB PKM ANLAGENBAU LEIPZIG)<br><br>* page 6; revendication 1 *<br>* page 3, ligne 12 - ligne 21 *<br>* page 4; exemple 1 *<br>* page 5; exemple 3 *<br>--- | 1,3,<br>17-19 | C02F3/34<br>C11C1/02 |
| A | PATENT ABSTRACTS OF JAPAN<br>vol. 13, no. 417 (C-636)(3765) 14 Septembre 1989<br>& JP-A-11 56 400 ( TATSUYA KATO ) 19 Juin 1989<br>* abrégé *<br>--- | 1,3,4,6 | |
| A | FR-A-584 738 (RAYMOND VIDAL)<br>* page 1, ligne 1 - ligne 12 *<br>* page 1, ligne 50 - ligne 53 *<br>* page 2; revendication 1 *<br>--- | 20 | |
| A | LU-A-60 783 (REALISATIONS TECHNIQUES INDUSTRIELLES)<br>* page 12; revendications 1,2 *<br>* page 3, ligne 14 - page 5, ligne 25 *<br>* page 6, ligne 18 - ligne 26 *<br>* page 7, ligne 20 - ligne 22 *<br>* page 8, ligne 22 - page 9, ligne 11 *<br><br>----- | 17,18 | **DOMAINES TECHNIQUES RECHERCHES (Int. Cl.5)**<br><br>C02F<br>C11C<br>C11B |

Le présent rapport a été établi pour toutes les revendications

| Lieu de la recherche | Date d'achèvement de la recherche | Examinateur |
|---|---|---|
| LA HAYE | 03 AOUT 1993 | TEPLY J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)